# EUROPEAN PATENT SPECIFICATION

(11) **EP 3 757 551 B1**
(45) Date of publication and mention of the grant of the patent: **30.03.2022**
(21) Application number: 19182633.8
(22) Date of filing: 26.06.2019
(51) Int. Cl.: G01N 21/66, G01N 21/67, G01N 21/68

(54) **SENSOR AND METHOD FOR DETERMINING AN AIR RATIO OF A COMBUSTIBLE GAS/AIR MIXTURE**
SENSOR UND VERFAHREN ZUR BESTIMMUNG EINES LUFTVERHÄLTNISSES EINES BRENNBAREN GAS-LUFT-GEMISCHES
CAPTEUR ET PROCÉDÉ PERMETTANT DE DÉTERMINER UN COEFFICIENT D'AIR D'UN MÉLANGE AIR/GAZ COMBUSTIBLE

(43) Date of publication of application: 30.12.2020
(73) Proprietor: Ademco 2 GmbH, 49504 Lotte (Büren) (DE)
(72) Inventor: Schäfer, Christian Franz Hugo, 49082 Osnabrück (DE); Leerkotte, Bernardus Johannes Maria, 7572TP Oldenzaal (NL)
(74) Representative: Sturm, Christoph

(56) References cited:
- EP-A1- 3 206 017
- WO-A1-2015/046875
- DE-A1-102015 210 123

## Description

The invention relates to a sensor for determining an air ratio of a combustible gas/air mixture. Further on, the invention relates to a method for determining an air ratio of a combustible gas/air mixture.

To ensure an efficient and clean combustion the air ratio is an important measurand. In the field of automotive engineering, so-called lambda (λ) sensors are known in this context, which are based mainly on the principle of electrochemical measuring cells.

EP 3 206 017 A1 discloses a sensor for determining an air ratio of a combustible gas/air mixture according to the pre-amble of claim 1. The sensor comprises a housing which limits a measuring space. The sensor further comprises a gas permeable separation means, which at the same time blocks the propagation of chemical reactions. The sensor further comprises an electrically operated stimulating means for an energy supply into the measuring space in order to bring about a chemical reaction of the combustible gas/air mixture in the measuring space. The sensor further comprises a voltage supply coupled with the stimulating means and at least one optical sensing device. The stimulating means is formed with a plurality of constructively and galvanically separated excitation electrodes. A sensing area of the at least one optical sensing device is directed in the measuring space onto a reaction position in which the chemical reaction of the combustible gas/air mixture takes place, wherein the optical sensing device senses the intensity of radiation from the reaction position in at least one wavelength range and generates a signal assigned to the sensed intensity, from which the air ratio can be calculated.

DE 10 2015 210 123 A1 and WO 2015 / 046 875 A1 disclose other prior art.

Against this background, a novel sensor and method, respectively according to claims 1 and 9, for determining an air ratio of a combustible gas/air mixture are provided. According to the present invention, the voltage supply is coupled with the excitation electrodes in such a way that a microwave field is provided in the reaction position such that, in the reaction position, an exothermic chemical reaction is induced by the microwave field in the combustible gas/air mixture.

The novel sensor for determining an air ratio of a combustible gas/air mixture provides a pre-combustion sensor or a gas detector having a measuring space and a reaction position within the measuring space being separated by the diffusion passage diffusion passage from the flow of the combustible gas/air mixture. The micro wave field induces exothermic chemical reactions in the reaction position. These reactions are releasing light and heat. The light from the reaction is measured with the optical sensing device, preferably with an optical sensing device provided by a photodiode. A processing system reads the measuring signal provided by the optical sensing device, from which the air ratio λ is calculated.

The novel sensor makes use of an energy supply to the combustible gas/air mixture in the reaction position by a microwave field. The novel sensor can be used to measure the air ratio λ in real time after mixing the combustible gas/air mixture. The novel sensor has a low dead-time and provides fast response compared to sensors known from practical use. The air ratio can be measured very fast, namely in about a few milliseconds. The electrical power needed by the sensor is very low, namely less than a few tens milliwatts. Heat transfer to the electrodes is low resulting in an increased lifetime of the novel sensor.

The novel sensor can be used to measure the air ratio for any type of a combustible gas/air mixture, like for a hydrogen/air mixture or for a natural gas/air mixture. No adaption process to a gas burner is needed. It is not necessary to parametrize the sensor to the used gas burner.

The novel sensor may be screwed directly in a gas mixing tube of a gas burner appliance after a venturi nozzle or fan. In combination with the fan, a gas valve, the venturi and electronic control system, the novel sensor allows to provide a gas/air mixture with the correct air factor to the gas burner.

According to a preferred embodiment, a control system regulates the energy flowing to the reaction position, namely by regulating the field strength of the microwave field and/or a frequency of the microwave field provided between the excitation electrodes in the reaction position. Preferably, the control system is adapted to regulate the field strength and/or the frequency of the microwave field provided between the excitation electrodes in the reaction position in such a way that electrons which are excited to oscillate by the microwave field do not get in touch with the excitation electrodes so that the electrons are not absorbed by the excitation electrodes. Such a sensor can measure the air ratio with a high accuracy very fast needing only very low electrical power.

According to a preferred embodiment, the voltage supply generates a radio frequency (RF) alternating (AC) voltage to provide the microwave field in the reaction position of the sensor. Preferably, the voltage supply is electrically coupled to the excitation electrodes of the sensor by a transmission line of the sensor being most preferably provided by a (½*n + ¼) wavelength micro-strip line - n being a natural number including zero. The frequency of the RF AC voltage generated by the voltage supply is controlled such that a standing wave is generated in the transmission line. Such a sensor can measure the air ratio with a high accuracy very fast needing only very low electrical power. The frequency of the microwave field between the excitation electrodes in the reaction position depends on the length of the micro-strip line.

The method for for determining an air ratio of a combustible gas/air mixture is defined in claim 9.

Preferred developments of the invention are provided by the dependent claims and the description which follows. Exemplary embodiments are explained in more detail on the basis of the drawing, in which:
- Figure 1: shows a schematic structure of the sensor for determining an air ratio of a combustible gas/air mixture;
- Figure 2: shows a perspective top view of a preferred embodiment of the sensor according to the present invention;
- Figure 3: shows a first detail of Figure 2;
- Figure 4: shows a second detail of Figure 2;
- Figure 5: shows the perspective top view of Figure 1 together with a schematic structure of electrical components of the preferred embodiment;
- Figure 6: shows a perspective bottom view of an embodiment of Figure 2.

The present invention relates to a method and to a sensor for determining an air ratio of a combustible gas/air mixture.

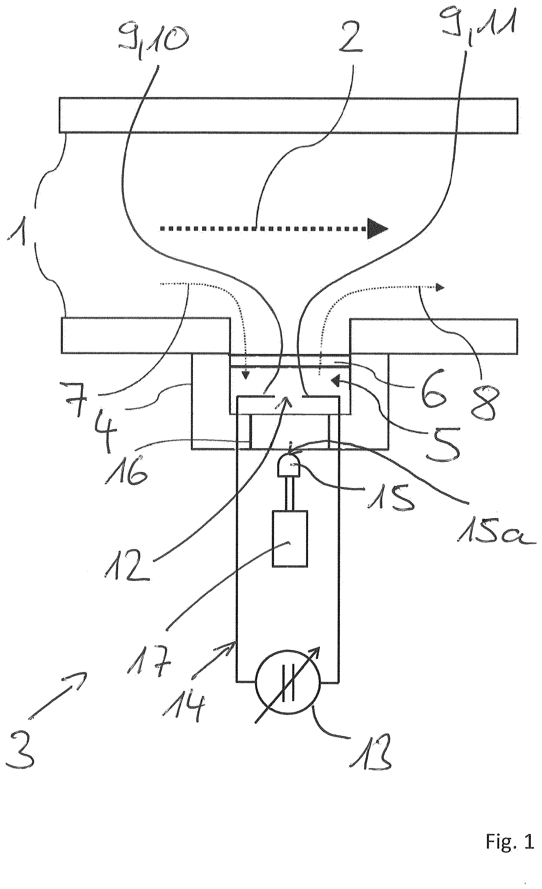

In Figure 1, a supply line 1 for a combustible gas/air mixture is shown. A combustible gas/air mixture is also often called fuel gas/air mixture. Along this supply line 1, the combustible gas/air mixture is supplied in the flow direction of the arrow 2 to a consumer, for example a gas burner of a gas burner appliance.

A sensor 3 for determining an air ratio of a combustible gas/air mixture is coupled to the supply line 1.

In an opening of the supply line 1, a housing 4 of the sensor 3 is coupled gastightly with the supply line 1. The sensor housing 4 comprises a cavity providing a measuring space 5. The measuring space 5 is constructively separated from the gas flow 2 by a gas permeable separation means 6.

The gas permeable separation means 6 may be provided by a sintered pane. Such a sintered pane provides as a separating means 6 for flame protection and suppression of possible turbulence. The sintered pane is permeable for the gas, such that proportions of the combustible gas/air mixture can diffuse into the measuring space 5 according to arrow 7 at any time from the gas flow 2. In the same way, the substances can enter the gas flow 2 from the measuring space 5 along the direction of the arrow 8.

In the measuring space 5 of the sensor 3, an electrically operated stimulating means 9 is arranged for an energy supply into the measuring space 5, in order to bring about an exothermal chemical reaction of a combustible gas/air mixture in the measuring space 5. The electrically operated stimulating means 9 is designed and adapted to effect an energy supply at a reaction position 12 situated in the measuring space 5.

The reaction position 12 is spaced from the housing 4 and the separation means 6 such that reaction position 12 is disposed within a quenching distance, belonging to the combustible gas which is to be used, to the housing 4 and/or separation means 6. So, the sensor 3 will inhibit ignition of the rest of the gas/air mixture within the sensor 3. The exothermal chemical reaction will occur only in the reaction position 12 and not outside the reaction position 12.

The stimulating means 9 is formed by constructively and galvanically separated excitation electrodes 10, 11 which protrude at least partially into the measuring space 5, wherein the reaction position 12 lies between the electrodes 10, 11.

A voltage supply 13 is coupled with the stimulating means 9. In the schematic Figure 1, the stimulating means 9 is electrically coupled with the voltage supply 13 by electrical coupling means, namely by a schematically shown electrical transmission line 14.

The sensor 3 for determining an air ratio of a combustible gas/air mixture further comprises at least one optical sensing device 15 having a sensing area 15a, said sensing area 15a is directed in the measuring space 5 onto the reaction position 12. The optical sensing device 12 senses the intensity of radiation from the reaction position in at least one wavelength range and generates a signal assigned to the sensed intensity, from which the air ratio can be calculated.

In the shown embodiment, the optical sensing device 15 has a photodiode arranged outside the measuring space 5. The measuring space 5 comprises on its side facing the optical sensing device 15 a window 16, through which radiation from the measuring space 5 reaches the photodiode. The photodiode may have a sensitivity range in the wavelength range of 800 nm to 1100 nm. The optical sensing device 15 is coupled with a processing device 17 which processes the signals of the optical sensing device 15. The processing device 17 calculates the air ratio of the combustible gas/air mixture on basis of the signal provided by the optical sensing device 15.

The voltage supply 13 is coupled with the excitation electrodes 10, 11 in such a way that a microwave field is provided in the reaction position 12 between the excitation electrodes 10, 11, such that, in the reaction position 12, an exothermic, chemical reaction is induced by the microwave field in the combustible gas/air mixture.

As mentioned above, the voltage supply 13 is electrically coupled to the excitation electrodes 10, 11 by the transmission line 14. The voltage supply 13 generates a radio frequency (RF) alternating (AC) voltage to provide the microwave field in the reaction position 12. A frequency of the radio frequency (RF) alternating (AC) voltage generated by the voltage supply 13 is controlled such that a standing wave is generated in the transmission line 14.

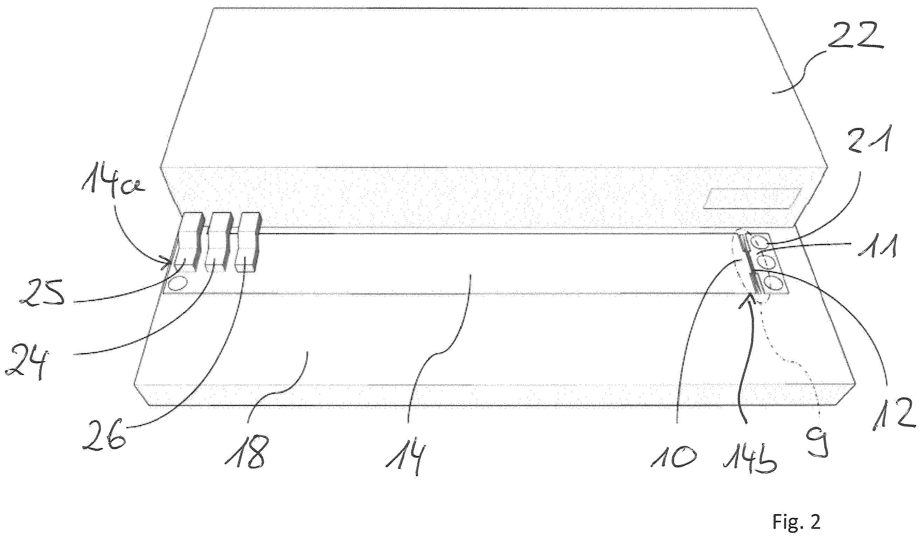

According to the preferred embodiment, the transmission line 14 is provided by a micro-strip line, preferably by a (½*n + ¼) wavelength micro-strip line, n being a natural number including zero. A first end region 14a (shown in figure 2) of the transmission line 14, namely of the micro-strip line, is coupled to the voltage supply 13 and a second end region 14b (shown in figure 2) of the transmission line 14, namely of the micro-strip line, is coupled to one of the excitation electrodes 10, 11 thereby providing a free-running oscillator as described below in greater detail.

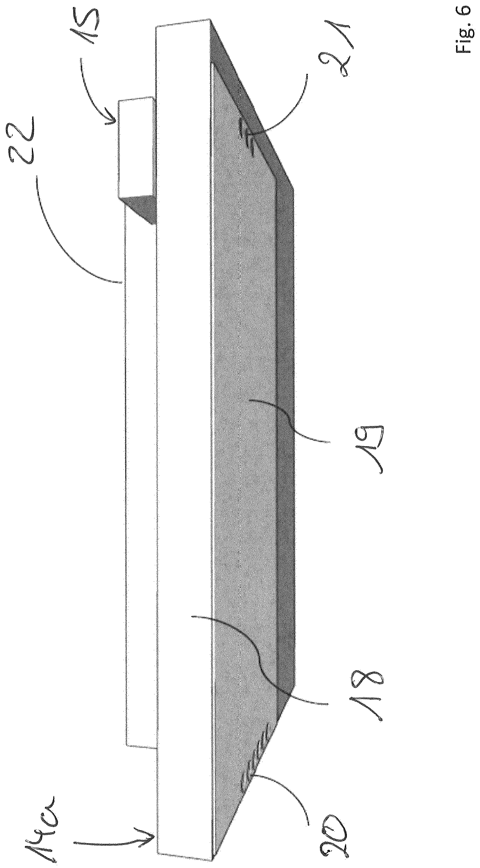

Figures 2 to 6 show details of the preferred embodiment of the sensor 3, whereon a standing wave is generated in the transmission line 14 as part of a free-running oscillator of the sensor 3, the transmission line 14 being provided by a ¼-wavelength micro-strip line and wherein the standing wave results from a radio frequency (RF) alternating (AC) voltage generated by the free-running oscillator which is energized by a DC voltage supply 13.

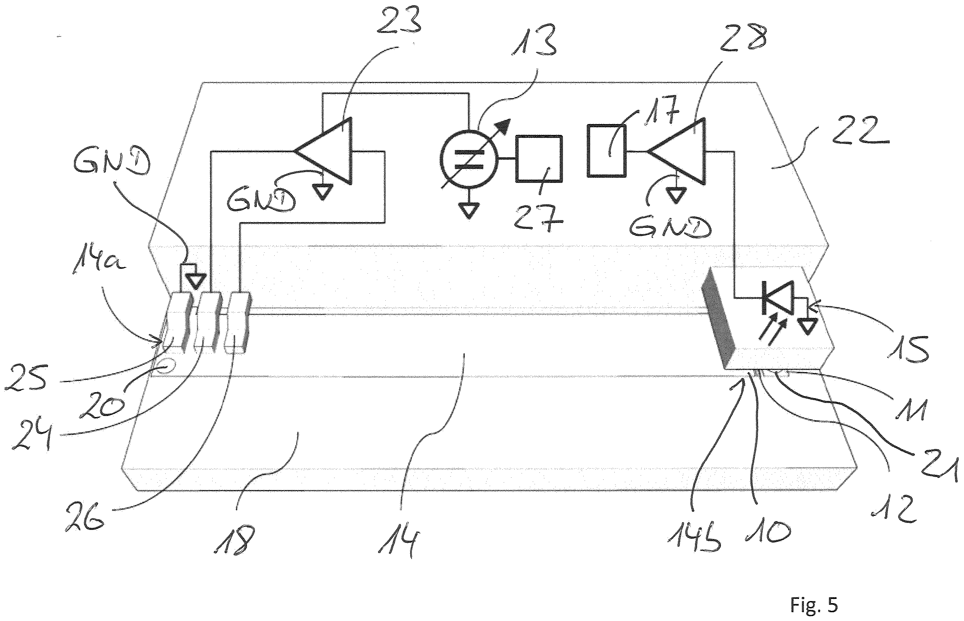

Figure 2 and Figure 5 show a perspective top view of the sensor 3 according to the preferred embodiment. The sensor 3 comprises a circuit board 18 carrying the transmission line 14 being provided by a (½*n + ¼) wavelength micro-strip line, preferably by a ¼ wavelength micro-strip line.

In the area of the first end region 14a of the micro-strip line 14, the micro-strip line 14 is electrically connected with an electrically conductive basic element 19. Through-connections or vias 20 made from metal provide the electrical connection of the micro-strip line 14 with the basic element / ground plane 19 at the first end 14a of the micro-strip line 14.

In the area of the second, opposite end region 14b of the micro-strip line 14, the micro-strip line 14 is electrically connected to one of the electrodes 10, 11, namely to a so-called active electrode 10 of the stimulating means 9.

The other electrode of the stimulating means 9, namely the so-called passive electrode 11, which is spaced apart from the active electrode 10, is electrically connected to the basic element / ground plane 19. Through-connections or vias 21 made from metal provide the electrical connection of the passive electrode 11 with the basic element / ground plane 19 adjacent the second end 14b of the micro-strip line 14. The excitation electrodes 10, 11 are spaced apart from each other preferably by a distance between 0,1 mm and 1,0 mm.

As mentioned above, a standing wave is generated in the micro-strip line 14.

A node of the standing wave is positioned at the position of the through-connections or vias 20 in the area of the first end region 14a of the micro-strip line 14. An antinode of the standing wave is positioned at the position of the active electrode 10 of the stimulating means 9 in the area of the second end region 14b of the micro-strip line 14.

The standing wave is generated by electrical or electronic components being positioned in a space drawn as a reserved space 22. Figure 5 shows a simplified schematic of these electrical or electronic components.

Said electrical or electronic components which generate the standing wave in the micro-strip line 14 comprise the DC voltage supply 13 and an amplifier 23. The amplifier 23 is shown only schematically. The amplifier 23 may comprise one or more transistors, resistors, capacitor and the like.

The standing wave generated by the electrical or electronic components 22, 23 within the micro-strip line 14 is fed with electrical energy by a first connection pin 24. Said first connection pin 24 is electrically connected to the micro-strip line 14 adjacent to the first end region 14a of the same.

A second connection pin 25 being positioned in close proximity to the first connection pin 24 is connected to ground GND of the through-connections or vias 20. A third connection pin 26 being also positioned in close proximity to the first connection pin 24 is used to provide a back coupling of the voltage signal of the standing wave to the amplifier 23. Because of the impedance transformation of the provided by the micro-strip line 14, an electrical voltage provided at the active electrode 10 of the stimulating means 9 is higher than electrical voltage being present at the first connection pin 24.

In order to generate the standing wave in the micro-strip line 14, the amplifier 23 provides noise, namely thermal noise. The thermal noise provides a broadband signal at the output of the amplifier 23 which is fed into or injected into the micro-strip line 14 at the first connection pin 24. Said broadband signal is split into two waves, namely into a first wave running towards the through-connections or vias 20 provided at the first end region 14a of the micro-strip line 14 and into a second wave running towards the active electrode of the stimulating means 9.

The first wave running towards the through-connections or vias 20 becomes reflected with reversed polarity by the micro-strip line 14 being short-circuited by the through-connections or vias 20. The distance between the connection pins 24, 25, 26, especially between the connection pins 24 and 25 is short compared to the entire length of the micro-strip line 14. The second wave running towards the active electrode 10 of the stimulating means 9 becomes reflected with same polarity at the active electrode 10. Within a few milliseconds a standing wave is generated and maintained within the micro-strip line 14. The voltage across the third connection pin 26 becomes injected into the micro-strip line 14 through the first connection pin 24 and the amplifier 23, with a voltage amplification factor of about 1 or of less than 1, namely as an electrical current being in phase. The amplitude of the radio frequency (RF) alternating (AC) voltage provided at the active electrode 10 can be adjusted through the supply voltage of the DC voltage supply 13.

The supply voltage of the DC voltage supply 13 can be controlled by a control system 27 which regulates the supply voltage. When the amplitude of the radio frequency (RF) alternating (AC) voltage provided at the active electrode 10 of the stimulating means 9 reaches a defined amount, a chemical reaction of the combustible gas/air mixture is created in the measuring space 5.

Said chemical reaction releases light and heat. The light from the reaction is preferably provided as near infrared radiation (NIR). The light is measured with the optical sensing device 15, preferably with a photodiode.

The processing system 17 reads the measuring signal provided by the optical sensing device 15, from which the air ratio λ is calculated. In Figure 5 an amplifier 28 is shown. The optical sensing device 15 generates an electrical signal on basis of the measured light and said electrical signal is amplified by the amplifier 28.

The control system 27 controls the energy flowing to the reaction position 12, namely by regulating the field strength and/or the frequency of the microwave field provided between the excitation electrodes 10, 11 in the reaction position 12. The control system 27 is adapted to regulate the field strength and/or the frequency of the microwave field provided between the excitation electrodes 10, 11 in the reaction position 12 in such a way that electrons which are excited to oscillate by the microwave field do not get in touch with the excitation electrodes 10, 11 so that the electrons are not absorbed by the excitation electrodes 10, 11.

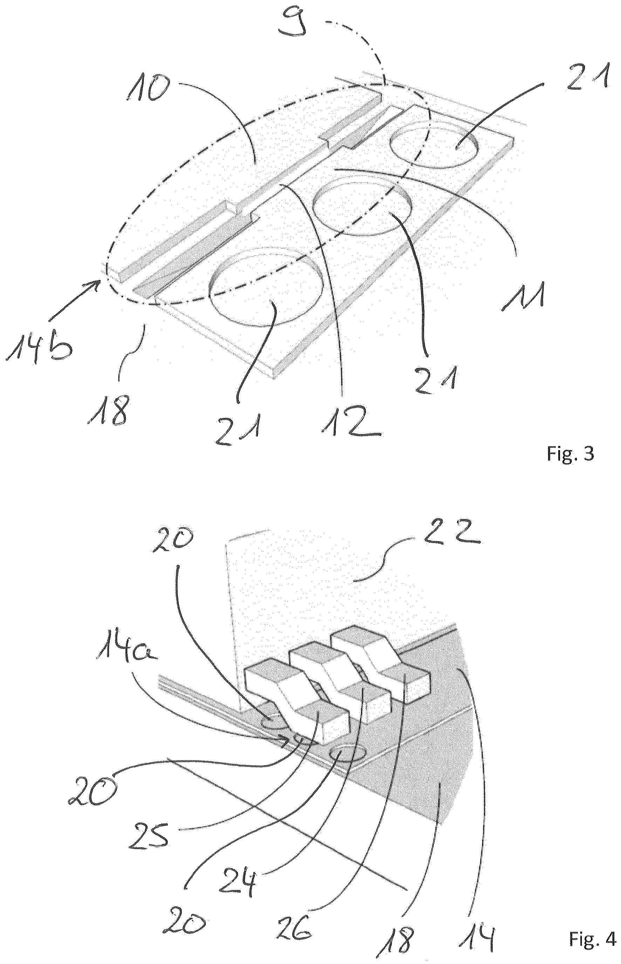

Figure 3 shows a detail of the sensor in the regions of the stimulating means 9. The reaction position 12 is positioned between the electrodes 10, 11 of the stimulating means 9. As mentioned above, one of the said electrodes provides an active electrode and the other electrode provides a passive electrode.

The active electrode 10 is coupled to the micro-strip line 14 while the passive electrode 11 is coupled to the basic element / ground plane19. Light, preferably provided as near infrared radiation (NIR), is emitted from the reaction position 12 is positioned between the electrodes 10, 11. In order to avoid damages of the circuit board 18, the circuit board 18 comprises a recess or a groove in the region of the electrodes 10, 11, preferably beneath the reaction position 12.

Surfaces of the electrodes 10, 11 may be covered or plated with e.g. gold. The circuit board 18 may be covered conformal coating like a protective lacquer.

The above described sensor 3 makes use of a low power radio frequency (RF) alternating (AC) voltage to stimulate an exothermic chemical reactions in a very small reaction position 12. A radio frequency (RF) alternating (AC) voltage having a frequency of e.g. about 2,5 GHz or about 5 GHz may be used. The sensor 3 uses a high frequency electrical microwave field between the electrodes 10, 11. The electric microwave field has a frequency of greater than about 1000 MHz; preferable an ISM-frequency of e.g. about 2,5 GHz or about 5 GHz.

The high frequency electrical microwave field is preferably generated by a micro-strip oscillator, based on electronically maintaining a standing wave in the micro-strip 14 on a printed circuit board 18 of the sensor 3. Within the gap of e.g. about 100 micrometres between the electrodes 10, 11 free electrons are forced to oscillate under influence of the alternating electric field with field strength with a magnitude of e.g. about 300kV/m. Due to the high frequency of the electric field, free electrons will move in a certain moment in the direction of one of the two electrodes 10, 11. However, before the electrons would reach that electrode, the alternating electric field has changed its direction, causing the electrons to decelerate, followed by acceleration in the direction of the opposite electrode. Free electrons will therefore oscillate without being absorbed by the excitation electrodes 10, 11.

The free electrons are moving perpendicular on the plane of the layer of the combustible gas/air mixture. During the movement of the free electrons a part of the kinetic energy will cause ionization of molecules in the air or combustible gas/air mixture, so additional secondary electrons are formed which are taking part in the number of oscillating electrons.

Another part of the kinetic energy of the electrons will be absorbed by collision with gas molecules, causing a temperature rise of the combustible gas/air mixture in the mentioned layer. By controlling the strength of the alternating electric field, the temperature in the layer can be influenced.

At reaching a certain electric field strength and temperature, an exothermic chemical reaction will start to occur, while emitting near infrared radiation (NIR) and other electro-magnetic waves. A part of the emitted light is measured by one or more optical sensing devices 15.

A major advantage of the sensor 3 according to the present invention is that from the reaction position 12 only electro-magnetic waves from exothermic chemical reactions are emitted. Light background as emitted from a glow wire method is vanished.

Another advantage is that the emitted electro-magnetic waves may be radiated directly to one or more optical sensing devices 15, without the need of optical sensing devices 15 as mirrors or lenses. By switching off or reducing the RF-energy under a threshold level, the exothermic chemical reaction is stopped or interrupted.

This sensor 3 can work in this way with an electronic shutter, by which the influence of external light can be measured and be compensated. From the signal of the optical sensing devices 15 the air factor of the combustible gas/air mixture is derived.

The electrical power needed by a sensor 3 can be decreased by activating the mirco-strip oscillator only a few milliseconds in a time frame of e.g. 0,1 seconds to 30 seconds.

The sensor 3 can be battery operated while consuming an electrical power of about a few milliwatt, e.g. of about 100 microwatt.

The method for determining an air ratio of a combustible gas/air mixture, the method comprising at least the following steps:
Coupling the measuring space 5 with the gas flow 2 which is to be monitored, wherein the measuring space 5 is coupled with the gas flow 2 by the gas permeable separation means 6 which forms a diffusion passage. Stimulating the gas situated in the measuring space 5 with the electrically operated stimulating means 9 at the reaction position 12, in order to effect a chemical reaction of a combustible gas/air mixture in the measuring space 5, wherein constructively and galvanically separated electrodes 10, 11 are used as stimulating means 9 which protrude at least partially into the measuring space 5, and wherein the reaction position 12 lies between the electrodes 10, 11, and wherein the stimulating means 9 is coupled with the voltage supply 13. Monitoring the measuring space 5 with an optical sensing device 15, wherein a sensing area 15a of the optical sensing device 15 is focused on the reaction position 12, wherein the intensity of the radiation is sensed. Calculating the air ratio of the gas/air mixture using the sensed radiation intensities.

The stimulation step comprises providing a microwave field in the reaction position 5 by the excitation electrodes 11, 12 being coupled with the voltage supply 13 such that, in the reaction position 12, an exothermic chemical reaction is induced by the microwave field in the combustible gas/air mixture.

In the preferred embodiment, a radio frequency (RF) alternating (AC) voltage is generated by the voltage supply 13 to provide the microwave field in the reaction position 12, namely in such a way that a standing wave is generated in the transmission line 14. The transmission line 14 is provided by micro-strip line, preferably by a (½*n + ¼) wavelength micro-strip line, n being a natural number including and preferably zero.

Alternatively, an external RF voltage generator may be used which may be couples to the electrodes 10, 11.

If an external RF voltage generator is used, the same may provide a control voltage for an impedance transformer which is directly coupled to the electrodes 10, 11. The external RF voltage generator may also be directly coupled to the electrodes 10, 11 without such an impedance transformer.

### List of reference signs

- 1: supply line
- 2: gas flow direction
- 3: sensor
- 4: housing
- 5: measuring space
- 6: separation means
- 7: gas diffusion
- 8: gas diffusion
- 9: stimulating means
- 10: electrode
- 11: electrode
- 12: reaction position
- 13: voltage supply
- 14: transmission line / micro-strip line
- 14a: end region
- 14b: end region
- 15: optical sensing device
- 15a: sensing area
- 16: window
- 17: processing device
- 18: circuit board
- 19: basic element / ground plane
- 20: through-connection / via
- 21: through-connection / via
- 22: cover
- 23: amplifier
- 24: first connection pin
- 25: second connection pin
- 26: third connection pin
- 27: control system
- 28: amplifier

## Claims

1. Sensor (3) for determining an air ratio of a combustible gas/air mixture, the sensor comprising:
a housing (4) which limits a measuring space (5),
a gas permeable separation means (6),
wherein said gas permeable separation means (6) forms a diffusion passage of the housing (4),
wherein the diffusion passage is arranged to couple a combustible gas/air mixture flow with the measuring space (5),
an electrically operated stimulating means (9) for an energy supply into the measuring space (5), in order to bring about a chemical reaction of a combustible gas/air mixture in the measuring space (5),
wherein the stimulating means (9) is adapted to effect the energy supply at a reaction position (12) situated in the measuring space (5), the reaction position being spaced from the housing (4) and the separation means (6),
wherein the stimulating means (9) is formed by constructively and galvanically separated excitation electrodes (10, 11) which protrude at least partially into the measuring space (5), wherein the reaction position lies (12) between the electrodes (10, 11),
a voltage supply (13) coupled with the stimulating means (9),
at least one optical sensing device (15) having a the sensing area (15a), said sensing area (15a) is directed in the measuring space (5) onto the reaction position (12), wherein the optical sensing device (15) sensing the intensity of radiation from the reaction position (12) and generates a signal assigned to the sensed intensity, from which the air ratio can be calculated, **characterized in that**
the voltage supply (13) is coupled with the excitation electrodes (10, 11) so that it is arranged to provide a microwave field in the reaction position (12) such that, in the reaction position (12), an exothermic chemical reaction is induced by the microwave field in the combustible gas/air mixture.

2. Sensor as claimed in claim 1, **characterized by**
a control system (27) which regulates the energy flowing to the reaction position (12), namely by regulating a field strength and/or a frequency of the microwave field provided between the excitation electrodes (10, 11) in the reaction position (12).

3. Sensor as claimed in claim 2, **characterized in that**
the control system (27) is adapted to regulate the field strength and/or the frequency of the microwave field provided between the excitation electrodes (10, 11) in the reaction position (12) in such a way that electrons which are excited to oscillate by the microwave field do not get in touch with the excitation electrodes (10, 11) so that most of the electrons are not absorbed by the excitation electrodes (10, 11).

4. Sensor as claimed in one of claims 1-3, **characterized in that**
the voltage supply (13) generates a radio frequency (RF) alternating (AC) voltage to provide the microwave field in the reaction position (12).

5. Sensor claimed in claim 4, **characterized in that**
the voltage supply (13) is electrically coupled to the excitation electrodes (10, 11) by a transmission line (14), wherein a frequency of the radio frequency (RF) alternating (AC) voltage generated by the voltage supply (13) is controlled such that a standing wave is generated in the transmission line (14).

6. Sensor as claimed in claim 5, **characterized in that**
a first end region of the transmission line (14) is coupled to the voltage supply (13) and a second end region of the transmission line (14) is coupled to one of the excitation electrodes (10, 11) thereby using the transmission line (14) as part of a free-running oscillator.

7. Sensor as claimed in claim 5 or 6, **characterized in that**
the transmission line (14) is provided by a micro-strip line, preferably a (½*n + ¼) wavelength micro-strip line, n being a natural number including and preferably zero.

8. Sensor as claimed in one of claims 1-7, **characterized in that**
the excitation electrodes (10, 11) are spaced apart from each other at a distance between 0,1 mm and 1,0 mm.

9. Method for determining an air ratio of a combustible gas/air mixture, the method comprising the steps:
coupling a measuring space (5) with a gas flow (2) which is to be monitored, wherein the measuring space (5) is coupled with the gas flow (2) by a gas permeable separation means (6) which forms a diffusion passage;
stimulating the gas situated in the measuring space (5) with an electrically operated stimulating means (9) at a reaction position (12), in order to cause a chemical reaction of a combustible gas/air mixture in the measuring space (5),
wherein constructively and galvanically separated electrodes (10, 11) are used as stimulating means (9) which protrude at least partially into the measuring space (5), wherein the reaction position (12) lies between the electrodes (10, 11),
wherein the stimulating means (9) coupled with a voltage supply (13);
monitoring the measuring space (5) with an optical sensing device (15), a sensing area (15a) of which is focused on the reaction position (12), wherein the intensity of the radiation is sensed;
calculating the air ratio using the sensed radiation intensities;
**characterized in that**
the stimulation step comprises providing a microwave field in the reaction position (5) by the excitation electrodes (11, 12) being coupled with the voltage supply (13) such that, in the reaction position (12), an exothermic chemical reaction is induced by the microwave field in the combustible gas/air mixture.

10. Method as claimed in claim 9, **characterized by**
regulating the energy flowing to the reaction position (12), namely regulating a field strength and/or a frequency of the microwave field provided between the excitation electrodes (10, 11) in the reaction position (12).

11. Method as claimed in claim 10, **characterized by**
regulating the field strength and/or the frequency of the microwave field provided between the excitation electrodes (10, 11) in the reaction position (12) in such a way that electrons which are excited to oscillate by the microwave field do not get in touch with the excitation electrodes (10, 11) so that most the electrons are not absorbed by the excitation electrodes (10, 11).

12. Method as claimed in one of claims 9-11, **characterized by**
generating a radio frequency (RF) alternating (AC) voltage by the voltage supply (13) to provide the microwave field in the reaction position (12).

13. Method as claimed in claim 12, **characterized by**
controlling a frequency of the radio frequency (RF) alternating (AC) voltage generated by the voltage supply (13) such that a standing wave is generated in a transmission line (14) which electrically coupled to the excitation electrodes (10, 11) and to the voltage supply (13).

14. Method as claimed in claim 13, **characterized by**
providing the transmission line (14) by a micro-strip line, preferably a (½*n + ¼) wavelength micro-strip line, n being a natural number including and preferably zero.

## Patentansprüche

1. Sensor (3) zum Bestimmen eines Luftverhältnisses eines brennbaren Gas-Luft-Gemischs, wobei der Sensor umfasst:
ein Gehäuse (4), das einen Messraum (5) begrenzt,
ein gasdurchlässiges Trennmittel (6),
wobei das gasdurchlässige Trennmittel (6) einen Diffusionskanal des Gehäuses (4) bildet,
wobei der Diffusionskanal zum Koppeln eines Stroms eines brennbaren Gas-Luft-Gemischs mit dem Messraum (5) angeordnet ist,
ein elektrisch betriebenes Stimulationsmittel (9) für Energiezufuhr in den Messraum (5), um eine chemische Reaktion eines brennbaren Gas-Luft-Gemischs im Messraum (5) herbeizuführen,
wobei das Stimulationsmittel (9) so ausgelegt ist, dass es die Energiezufuhr in einer Reaktionsposition (12) durchführt, die sich im Messraum (5) befindet, wobei die Reaktionsposition vom Gehäuse (4) und dem Trennmittel (6) beabstandet ist,
wobei das Stimulationsmittel (9) durch konstruktiv und galvanisch getrennte Erregerelektroden (10, 11) ausgebildet ist, die zumindest teilweise in den Messraum (5) vorstehen, wobei die Reaktionsposition (12) zwischen den Elektroden (10, 11) liegt,
eine Spannungsversorgung (13), die mit dem Stimulationsmittel (9) gekoppelt ist,
zumindest eine optische Erfassungsvorrichtung (15) mit einem Erfassungsbereich (15a), wobei der Erfassungsbereich (15a) im Messraum (5) auf die Reaktionsposition (12) gerichtet ist, wobei die optische Erfassungsvorrichtung (15) die Intensität von Strahlung von der Reaktionsposition (12) erfasst und ein der erfassten Intensität zugeordnetes Signal erzeugt, aus dem das Luftverhältnis berechnet werden kann, **dadurch gekennzeichnet, dass**
die Spannungsversorgung (13) mit den Erregerelektroden (10, 11) gekoppelt ist, so dass sie angeordnet ist, um ein Mikrowellenfeld in der Reaktionsposition (12) bereitzustellen, derart dass in der Reaktionsposition (12) eine exotherme chemische Reaktion durch das Mikrowellenfeld im brennbaren Gas-Luft-Gemisch ausgelöst wird.

2. Sensor nach Anspruch 1, **gekennzeichnet durch**
ein Steuersystem (27), das die Energie regelt, die zur Reaktionsposition (12) strömt, und zwar durch Regeln einer Feldstärke und/oder einer Frequenz des zwischen den Erregerelektroden (10, 11) in der Reaktionsposition (12) bereitgestellten Mikrowellenfeldes.

3. Sensor nach Anspruch 2, **dadurch gekennzeichnet, dass**
das Steuersystem (27) so ausgelegt ist, dass es die Feldstärke und/oder die Frequenz des zwischen den Elektroden (10, 11) in der Reaktionsposition (12) bereitgestellten Mikrowellenfeldes derart regelt, dass Elektronen, die durch das Mikrowellenfeld zum Schwingen angeregt werden, nicht mit den Erregerelektroden (10, 11) in Berührung kommen, so dass der Großteil der Elektronen nicht von den Erregerelektroden (10, 11) absorbiert wird.

4. Sensor nach einem der Ansprüche 1 bis 3, **dadurch gekennzeichnet, dass**
die Spannungsversorgung (13) eine Hochfrequenz(HF)-Wechsel(AC)-Spannung erzeugt, um das Mikrowellenfeld in der Reaktionsposition (12) bereitzustellen.

5. Sensor nach Anspruch 4, **dadurch gekennzeichnet, dass**
die Spannungsversorgung (13) durch eine Übertragungsleitung (14) elektrisch mit dem Erregerelektroden (10, 11) gekoppelt ist, wobei eine Frequenz der von der Spannungsversorgung (13) erzeugten Hochfrequenz(RF)-Wechsel(AC)-Spannung derart gesteuert wird, dass eine stehende Welle in der Übertragungsleitung (14) erzeugt wird.

6. Sensor nach Anspruch 5, **dadurch gekennzeichnet, dass**
eine erste Endregion der Übertragungsleitung (14) mit der Spannungsversorgung (13) gekoppelt ist, und eine zweite Endregion der Übertragungsleitung (14) mit einer der Erregerelektroden (10, 11) gekoppelt ist, um dadurch die Übertragungsleitung (14) als Teil eines freischwingenden Oszillators zu verwenden.

7. Sensor nach Anspruch 5 oder 6, **dadurch gekennzeichnet, dass**
die Übertragungsleitung (14) durch eine Mikrostreifenleitung, vorzugsweise eine (½ * n + ¼)-Wellenlängen-Mikrostreifenleitung vorgesehen ist, wobei n eine natürliche Zahl, einschließlich und vorzugsweise null, ist.

8. Sensor nach einem der Ansprüche 1 bis 7, **dadurch gekennzeichnet, dass**
die Erregerelektroden (10, 11) in einem Abstand von 0,1 mm bis 1,0 mm voneinander beabstandet sind.

9. Verfahren zur Bestimmung eines Luftverhältnisses eines brennbaren Gas-Luft-Gemischs, wobei das Verfahren die folgenden Schritte umfasst:
Koppeln eines Messraums (5) mit einem Gasstrom (2), der überwacht werden soll, wobei der Messraum (5) durch ein gasdurchlässiges Trennmittel (6), das einen Diffusionskanal bildet, mit dem Gasstrom (2) gekoppelt ist;
Stimulieren des im Messraum (5) befindlichen Gases mit einem elektrisch betriebenen Stimulationsmittel (9) in einer Reaktionsposition (12), um eine chemische Reaktion eines brennbaren Gas-Luft-Gemischs im Messraum (5) zu bewirken,
wobei konstruktiv und galvanisch getrennte Erregerelektroden (10, 11), die zumindest teilweise in den Messraum (5) vorstehen, als Stimulationsmittel (9) verwendet werden, wobei die Reaktionsposition (12) zwischen den Elektroden (10, 11) liegt,
wobei das Stimulationsmittel (9) mit einer Spannungsversorgung (13) gekoppelt ist;
Überwachen des Messraums (5) mit einer optischen Erfassungsvorrichtung (15), von der ein Erfassungsbereich (15a) auf die Reaktionsposition (12) gerichtet ist, in der die Strahlungsintensität erfasst wird;
Berechnen des Luftverhältnisses unter Verwendung der erfassten Strahlungsintensitäten;
**dadurch gekennzeichnet, dass**
der Stimulationsschritt ein Bereitstellen eines Mikrowellenfeldes in der Reaktionsposition (5) durch die mit der Spannungsversorgung (13) gekoppelten Erregerelektroden (11, 12) umfasst, derart dass in der Reaktionsposition (12) eine exotherme chemische Reaktion durch das Mikrowellenfeld im brennbaren Gas-Luft-Gemisch ausgelöst wird.

10. Verfahren nach Anspruch 9, **gekennzeichnet durch**
Regeln der Energie, die zur Reaktionsposition (12) strömt, und zwar Regeln einer Feldstärke und/oder einer Frequenz des zwischen den Erregerelektroden (10, 11) in der Reaktionsposition (12) bereitgestellten Mikrowellenfeldes.

11. Verfahren nach Anspruch 10, **gekennzeichnet durch**
Regeln der Feldstärke und/oder der Frequenz des zwischen den Elektroden (10, 11) in der Reaktionsposition (12) bereitgestellten Mikrowellenfeldes derart, dass Elektronen, die durch das Mikrowellenfeld zum Schwingen angeregt werden, nicht mit den Erregerelektroden (10, 11) in Berührung kommen, so dass der Großteil der Elektronen nicht von den Erregerelektroden (10, 11) absorbiert wird.

12. Verfahren nach einem der Ansprüche 9 bis 11, **gekennzeichnet durch**
Erzeugen einer Hochfrequenz(HF)-Wechsel(AC)-Spannung durch die Spannungsversorgung (13), um das Mikrowellenfeld in der Reaktionsposition (12) bereitzustellen.

13. Verfahren nach Anspruch 12, **gekennzeichnet durch**
derartiges Steuern einer Frequenz der von der Spannungsversorgung (13) erzeugten Hochfrequenz(HF)-Wechsel(AC)-Spannung, dass eine stehende Welle in einer Übertragungsleitung (14) erzeugt wird, die mit den Erregerelektroden (10, 11) und mit der Spannungsversorgung (13) elektrisch gekoppelt ist.

14. Verfahren nach Anspruch 13, **gekennzeichnet durch**
Bereitstellen der Übertragungsleitung (14) durch eine Mikrostreifenleitung, vorzugsweise eine (½ * n + ¼)-Wellenlängen-Mikrostreifenleitung, wobei n eine natürliche Zahl, einschließlich und vorzugsweise null, ist.

## Revendications

1. Capteur (3) pour déterminer la teneur en air d'un mélange gaz combustible/air, le capteur comprenant :
un boîtier (4) qui délimite un espace de mesure (5),
des moyens de séparation perméables aux gaz (6),
où lesdits moyens de séparation perméables aux gaz (6) forment un passage de diffusion du boîtier (4),
où le passage de diffusion est disposé pour coupler un flux de mélange gaz combustible/air avec l'espace de mesure (5),
des moyens de stimulation (9) actionnés électriquement pour une alimentation en énergie dans l'espace de mesure (5), afin de provoquer une réaction chimique d'un mélange gaz combustible/air dans l'espace de mesure (5),
où les moyens de stimulation (9) sont adaptés pour effectuer l'alimentation en énergie à une position de réaction (12) située dans l'espace de mesure (5), la position de réaction étant espacée du boîtier (4) et des moyens de séparation (6),
où les moyens de stimulation (9) sont formés par des électrodes d'excitation (10, 11) séparées de manière constructive et galvanique, qui font saillie au moins partiellement dans l'espace de mesure (5), où la position de réaction se trouve (12) entre les électrodes (10, 11),
une alimentation en tension (13) couplée aux moyens de stimulation (9),
au moins un dispositif de détection optique (15) ayant une zone de détection (15a), ladite zone de détection (15a) est dirigée dans l'espace de mesure (5) sur la position de réaction (12), où le dispositif de détection optique (15) détecte l'intensité du rayonnement provenant de la position de réaction (12) et génère un signal associé à l'intensité détectée, à partir duquel la teneur en air peut être calculée,
le capteur étant **caractérisé en ce que :**
l'alimentation en tension (13) est couplée aux électrodes d'excitation (10, 11) de sorte qu'elle est agencée pour fournir un champ de micro-ondes dans la position de réaction (12) de sorte que, dans la position de réaction (12), une réaction chimique exothermique est induite par le champ de micro-ondes dans le mélange gaz combustible/air.

2. Capteur tel que revendiqué dans la revendication 1, **caractérisé par :**
un système de commande (27) qui régule l'énergie circulant vers la position de réaction (12), notamment en régulant une intensité de champ et/ou une fréquence du champ de micro-ondes délivrées entre les électrodes d'excitation (10, 11) dans la position de réaction (12).

3. Capteur tel que revendiqué dans la revendication 2, **caractérisé en ce que :**
le système de commande (27) est adapté pour réguler l'intensité de champ et/ou la fréquence du champ de micro-ondes délivrées entre les électrodes d'excitation (10, 11) dans la position de réaction (12) de sorte que les électrons qui sont excités pour osciller par le champ de micro-ondes n'entrent pas en contact avec les électrodes d'excitation (10, 11) de sorte que la plupart des électrons ne soient pas absorbés par les électrodes d'excitation (10, 11).

4. Capteur tel que revendiqué dans l'une des revendications 1 à 3, **caractérisé en ce que :**
l'alimentation en tension (13) génère une tension alternative (AC) radiofréquence (RF) pour délivrer le champ de micro-ondes dans la position de réaction (12).

5. Capteur tel que revendiqué dans la revendication 4, **caractérisé en ce que :**
l'alimentation en tension (13) est couplée électriquement aux électrodes d'excitation (10, 11) par une ligne de transmission (14), où une fréquence de la tension alternative (AC) radiofréquence (RF) générée par l'alimentation en tension (13) est contrôlée de sorte qu'une onde stationnaire est générée dans la ligne de transmission (14).

6. Capteur tel que revendiqué dans la revendication 5, **caractérisé en ce que :**
une première région d'extrémité de la ligne de transmission (14) est couplée à l'alimentation en tension (13) et une seconde région d'extrémité de la ligne de transmission (14) est couplée à l'une des électrodes d'excitation (10, 11), utilisant ainsi la ligne de transmission (14) comme partie d'un oscillateur libre.

7. Capteur tel que revendiqué dans la revendication 5
ou la revendication 6, **caractérisé en ce que :**
la ligne de transmission (14) se voit fournir une ligne microbande, de préférence une ligne microbande de (1/2*n + 1/4) longueur d'onde, n étant un nombre naturel incluant zéro et étant de préférence égal à zéro.

8. Capteur tel que revendiqué dans l'une des revendications 1 à 7, **caractérisé en ce que :**
les électrodes d'excitation (10, 11) sont espacées les unes des autres d'une distance comprise entre 0,1 mm et 1,0 mm.

9. Procédé pour déterminer une teneur d'air d'un mélange gaz combustible/air, le procédé comprenant les étapes suivantes :
coupler un espace de mesure (5) avec un flux de gaz (2) à surveiller, l'espace de mesure (5) étant couplé au flux de gaz (2) par des moyens de séparation (6) perméables au gaz qui forment un passage de diffusion ;
stimuler le gaz situé dans l'espace de mesure (5) avec des moyens de stimulation (9) actionnés électriquement à une position de réaction (12), afin de provoquer une réaction chimique d'un mélange gaz combustible/air dans l'espace de mesure (5),
où des électrodes (10, 11) séparées de manière constructive et galvanique sont utilisées comme moyens de stimulation (9) qui font saillie au moins partiellement dans l'espace de mesure (5), où la position de réaction (12) se trouve entre les électrodes (10, 11),
où les moyens de stimulation (9) sont couplés à une alimentation en tension (13) ;
surveiller l'espace de mesure (5) avec un dispositif de détection optique (15), dont une zone de détection (15a) est focalisée sur la position de réaction (12), où l'intensité du rayonnement est détectée ;
calculer la teneur en air en utilisant les intensités de rayonnement détectées ;
le procédé étant **caractérisé en ce que :**
l'étape de stimulation comprend de délivrer un champ de micro-ondes dans la position de réaction (5) par les électrodes d'excitation (11, 12) couplées à l'alimentation en tension (13) de sorte que, dans la position de réaction (12), une réaction chimique exothermique est induite par le champ de micro-ondes dans le mélange gaz combustible/air.

10. Procédé tel que revendiqué dans la revendication 9, **caractérisé par** l'étape suivante :
réguler l'énergie circulant vers la position de réaction (12), notamment réguler une intensité de champ et/ou une fréquence du champ de micro-ondes délivrées entre les électrodes d'excitation (10, 11) dans la position de réaction (12).

11. Procédé tel que revendiqué dans la revendication 10, **caractérisé par** l'étape suivante :
réguler l'intensité de champ et/ou la fréquence du champ de micro-ondes délivrées entre les électrodes d'excitation (10, 11) dans la position de réaction (12) de sorte que les électrons qui sont excités pour osciller par le champ de micro-ondes n'entrent pas en contact avec les électrodes d'excitation (10, 11) de sorte que la plupart des électrons ne soient pas absorbés par les électrodes d'excitation (10, 11).

12. Procédé tel que revendiqué dans l'une des revendications 9 à 11, **caractérisé par** l'étape suivante :
générer une tension alternative (AC) radiofréquence (RF) par l'alimentation en tension (13) pour délivrer le champ de micro-ondes dans la position de réaction (12).

13. Procédé tel que revendiqué dans la revendication 12, **caractérisé par** l'étape suivante :
contrôler une fréquence de la tension alternative (AC) radiofréquence (RF) générée par l'alimentation en tension (13) de sorte qu'une onde stationnaire soit générée dans une ligne de transmission (14) qui est couplée électriquement aux électrodes d'excitation (10, 11) et à l'alimentation en tension (13).

14. Procédé tel que revendiqué dans la revendication 13, **caractérisé par** l'étape suivante :
fournir à la ligne de transmission (14) une ligne microbande, de préférence une ligne microbande de (1/2*n + 1/4) longueur d'onde, n étant un nombre naturel incluant zéro et étant de préférence égal à zéro.
